# EUROPÄISCHE PATENTSCHRIFT

(11) **EP 2 213 054 B1**
(45) Veröffentlichungstag und Bekanntmachung des Hinweises auf die Patenterteilung: **17.01.2018**
(21) Anmeldenummer: 08842897.4
(22) Anmeldetag: 20.10.2008
(51) Int. Cl.: H04L 12/40

(54) **KOMMUNIKATIONSSYSTEM MIT EINEM CAN-BUS UND VERFAHREN ZUM BETREIBEN EINES SOLCHEN KOMMUNIKATIONSSYSTEMS**
COMMUNICATION SYSTEM HAVING A CAN BUS AND METHOD FOR OPERATING SAID COMMUNICATION SYSTEM
SYSTÈME DE COMMUNICATION DOTÉ D'UN BUS CAN ET PROCÉDÉ DE FONCTIONNEMENT D'UN TEL SYSTÈME DE COMMUNICATION

(30) Priorität: 26.10.2007 DE 102007051657
(43) Veröffentlichungstag der Anmeldung: 04.08.2010
(73) Patentinhaber: Robert Bosch GmbH, 70442 Stuttgart (DE)
(72) Erfinder: AUE, Axel, 70825 Muenchingen (DE); GRUENEWALD, Martin, 71665 Vaihingen/Enz (DE)
(86) Internationale Anmeldenummer: PCT/EP2008/064131
(87) Internationale Veröffentlichungsnummer: WO 2009/053332

(56) Entgegenhaltungen:
- WO-A-2005/081463
- WO-A2-02/46938
- DE-A1- 10 153 085
- DE-A1- 10 301 899
- INFINEON: "TC1796 32-bit Single- Chip Microcontroller Tri Core" INTERNET ARTICLE, [Online] September 2005 (2005-09), Seiten 1-123, XP002512756 Internet Gefunden im Internet: URL:ftp://ftp.efo.ru/pub/infineon/TC179_5F ds_5Fv03.pdf> [gefunden am 2009-01-29]

## Beschreibung

### Stand der Technik

Die betrifft ein Kommunikationssystem mit einem CAN-Bus und ein Verfahren zum Betreiben eines Kommunikationssystems mit einem CAN-Bus.

Bei der Übertragung von Daten, insbesondere von CAN-Nachrichten, mittels eines CAN-Busses beträgt der Protokoll-Overhead des durch den CAN-Bus bedingten physikalischen Protokolls etwa 55%, d.h. der Header-Teil der jeweiligen CAN-Nachricht ist größer als ihr Nutzdaten-Teil oder Payload-Teil.

Ferner ist die maximal mögliche Symbolrate eines CAN-Busses derzeit aufgrund der physikalischen Randbedingungen und insbesondere aufgrund asymmetrischer Verzögerungen auf dem CAN-Bus auf etwa 1 MBaud beschränkt.

Die Patentanmeldung DE 101 53 085 A1 offenbart eine Vorrichtung zur Programmierung einer Steuereinheit, wobei die Steuereinheit über eine Kommunikationsschnittstelle mit einer externen Programmiereinheit verbindbar ist, wobei eine interne Kommunikationsverbindung die Kommunikationsschnittstelle mit einer Kontrolleinheit verbindet, die ein Programmierelement und ein Kommunikationselement aufweist, wobei ein Schaltmittel vorgesehen ist, durch welches die Kommunikationsverbindung zwischen dem Programmierelement und dem Kommunikationselement umgeschaltet wird.

WO 2005/081463 A1 offenbart ein Kommunikationssystem mit redundanter Übertragung von Nachrichten über eine Datenbusstruktur und eine Versorgungsleitungsstruktur mittels mehrerer parallel verwendeter Schnittstelleneinrichtungen bzw. Transceiver, wobei eine Zeitfensterstruktur verwendet wird.
WO 02/46938 A2 offenbart eine Umschaltung zwischen einer Datenübertragung mit Manchester-Kodierung und einer UART-Datenübertragung, wobei damit eine Erhöhung der Übertragungsbandbreite erzielt wird.

### Offenbarung der Erfindung

Das erfindungsgemäße Kommunikationssystem mit den Merkmalen des Anspruchs 1 und das erfindungsgemäße Verfahren zum Betreiben eines Kommunikationssystems mit den Merkmalen des Anspruchs 14 weisen jeweils den Vorteil auf, dass die Geräte, welche mittels des CAN-Busses gekoppelt sind, dazu geeignet sind, in einem ersten Übertragungsmodus CAN-Datenrahmen und in einem zweiten Übertragungsmodus ASC(ASC; asynchrone serielle Kommunikation)-Datenrahmen über den CAN-Bus zu übertragen.
Ein besonderer Vorteil der vorliegenden Erfindung liegt darin, dass die ASC-Datenrahmen gegenüber den CAN-Datenrahmen mit einem höheren Bustakt über den CAN-Bus übertragen werden können. Ferner weisen die ASC-Datenrahmen gegenüber den CAN-Datenrahmen einen kleineren Header-Teil

Ein besonderer Vorteil der vorliegenden Erfindung liegt darin, dass die ASC-Datenrahmen gegenüber den CAN-Datenrahmen mit einem höheren Bustakt über den CAN-Bus übertragen werden können. Ferner weisen die ASC-Datenrahmen gegenüber den CAN-Datenrahmen einen kleineren Header-Teil und somit einen größeren Nutzdaten-Teil oder Payload-Teil auf. Folglich ist gemäß der vorliegenden Erfindung die Symbolrate und die Datenübertragungsrate des CAN-Busses gesteigert bzw. maximiert. Mit der vorliegenden Erfindung ist insbesondere eine Symbolrate von 4 MBaud und eine Reduzierung des Protokoll-Overheads von 55% auf 10% vorteilhafterweise ermöglicht.

Gemäß der vorliegenden Erfindung wird ein Kommunikationssystem vorgeschlagen, welches einen CAN-Bus und zumindest zwei mittels des CAN-Busses gekoppelte Geräte aufweist. Dabei weist ein solches Gerät eine CAN-Steuereinheit, eine asynchrone, serielle Kommunikations(ASC)-Schnittstelleneinheit und ein Schaltmittel auf.

Die jeweilige CAN-Steuereinheit ist dazu geeignet, in einem ersten Übertragungsmodus CAN-Datenrahmen mittels eines ersten physikalischen Protokolls über den CAN-Bus zu übertragen. Die asynchrone, serielle Kommunikationsschnittstelleneinheit oder ASC-Schnittstelleneinheit ist dazu geeignet, in einem zweiten Übertragungsmodus ASC-Datenrahmen mittels eines zweiten physikalischen Protokolls über den CAN-Bus zu übertragen. Das Schaltmittel ist dazu eingerichtet, zwischen dem ersten Übertragungsmodus und dem zweiten Übertragungsmodus in Abhängigkeit zumindest einer zwischen dem jeweiligen Gerät und zumindest einem weiteren Gerät geltenden Vereinbarung umzuschalten.

Des Weiteren wird ein Verfahren zum Betreiben eines Kommunikationssystems mit einem CAN-Bus und zumindest zwei mittels des CAN-Busses gekoppelten Geräten vorgeschlagen, welches die folgenden Schritte aufweist:
a) Ausstatten des jeweiligen Gerätes mit einer CAN-Steuereinheit, welche dazu geeignet ist, in einem ersten Übertragungsmodus CAN-Datenrahmen mittels eines ersten physikalischen Protokolls über den CAN-Bus zu übertragen;
b) Ausstatten des jeweiligen Gerätes mit einer asynchronen, seriellen Kommunikations(ASC)-Schnittstelleneinheit, welche dazu geeignet ist, in einem zweiten Übertragungsmodus ASC-Datenrahmen mittels eines zweiten physikalischen Protokolls über den CAN-Bus zu übertragen; und
c)Umschalten einer vorbestimmten Anzahl von Geräten zwischen dem ersten Übertragungsmodus und dem zweiten Übertragungsmodus in Abhängigkeit zumindest einer zwischen der vorbestimmten Anzahl der Geräte geltenden Vereinbarung.

In den Unteransprüchen finden sich vorteilhafte Weiterbildungen und Ausgestaltungen des in Anspruch 1 angegebenen Kommunikationssystems und des in Anspruch 14 angegebenen Verfahrens.

### Ausführungsformen der Erfindung

Gemäß einer bevorzugten Ausgestaltung der Erfindung umfasst die Vereinbarung, in welchem oder welchen vorbestimmten Zeitfenstern und/oder in Abhängigkeit welches oder welcher vorbestimmter Ereignisse das jeweilige Schaltmittel einer vorbestimmten Anzahl von Geräten in den ersten Übertragungsmodus oder in den zweiten Übertragungsmodus schaltet.

Gemäß einer weiteren bevorzugten Ausgestaltung gibt die Vereinbarung an, in welchem oder welchen vorbestimmten Zeitfenstern und/oder in Abhängigkeit welches oder welcher vorbestimmter Ereignisse das jeweilige Schaltmittel einer vorbestimmten Anzahl von Geräten in den zweiten Übertragungsmodus umschaltet und welches der Geräte in einem oder mehreren anschließenden Zeitfenstern eine ausschließliche Sendeberechtigung besitzt.

Gemäß einer weiteren bevorzugten Ausgestaltung ist die Vereinbarung zumindest teilweise als Teil eines in dem jeweiligen Gerät speicherbaren Steuerprogramms und/oder zumindest teilweise als Teil einer über den CAN-Bus übertragbaren Vereinbarungsnachricht ausgebildet.

Gemäß einer weiteren bevorzugten Weiterbildung werden in dem zweiten Übertragungsmodus Zeitfenster für die Übertragung von Datenrahmen, insbesondere als C-Datenrahmen, vorbestimmt, in welchen zumindest ein jeweiliges Gerät, eine vorbestimmte Anzahl der Geräte oder alle Geräte senden oder empfangen können.

Insbesondere werden in dem zweiten Übertragungsmodus in TTCAN definierte Zeitfenster für die Übertragung der Datenrahmen vorbestimmt. Durch die Ausgestaltung der vorbestimmten Zeitfenster in dem zweiten Übertragungsmodus ist es vorteilhafterweise ermöglicht, garantierte Antwortzeiten auf den CAN-Bus zu erhalten.

Gemäß einer weiteren bevorzugten Ausgestaltung ist die Vereinbarung als zumindest ein in TTCAN definiertes Zeitfenster ausgestaltet oder in zumindest einem in TTCAN definiertem Zeitfenster integriert.

Gemäß einer weiteren bevorzugten Ausgestaltung ist der zweite Übertragungsmodus gegenüber dem ersten Übertragungsmodus priorisiert.

Gemäß einer bevorzugten Weiterbildung der Erfindung ist ein in dem zweiten Übertragungsmodus sendendes Gerät mittels des zweiten physikalischen Protokolls dazu geeignet, zu einer vorbestimmten Anzahl empfangender Geräte eine Punkt-zu-Punkt-Verbindung oder eine Punkt-zu-Mehrpunkt-Verbindung zur Verhinderung von asymmetrischen Verzögerungen auf dem CAN-Bus auszubilden.

Gemäß einer weiteren bevorzugten Ausgestaltung überträgt die CAN-Steuereinheit die CAN-Datenrahmen in dem ersten Übertragungsmodus mit einem ersten Bustakt über den CAN-Bus und überträgt die ASC-Schnittstelleneinheit überträgt die ASC-Datenrahmen in dem zweiten Übertragungsmodus mit einem zweiten Bustakt über den CAN-Bus, wobei der zweite Bustakt höher als der erste Bustakt ist.

Gemäß einer weiteren bevorzugten Ausgestaltung ist der zweite Bustakt um einen Faktor zwischen 2 und 10, bevorzugt zwischen 5 und 10, besonders bevorzugt zwischen 8 und 10, höher als der erste Bustakt.

Gemäß einer weiteren bevorzugten Ausgestaltung weisen ein CAN-Datenrahmen und ein ASC-Datenrahmen jeweils einen Header-Teil und einen Nutzdaten-Teil auf, wobei der Header-Teil des ASC-Datenrahmens kleiner als der Header-Teil des CAN-Datenrahmens ist.

Gemäß einer weiteren bevorzugten Ausgestaltung ist der Header-Teil des ASC-Datenrahmens um einen Faktor zwischen 2 bis 5, bevorzugt zwischen 3 und 5, besonders bevorzugt zwischen 4 und 5, kleiner als der Header-Teil des CAN-Datenrahmens ist.

Gemäß einer weiteren bevorzugten Weiterbildung umfassen die zumindest zwei mittels des CAN-Busses gekoppelten Geräte mindestens zwei Steuergeräte.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: ein schematisches Blockschaltbild eines ersten Ausführungsbeispiels eines Kommunikationssystems gemäß der vorliegenden Erfindung;
- Figur 2: ein schematisches Blockschaltbild eines zweiten Ausführungsbeispiels eines Kommunikationssystems gemäß der vorliegenden Erfindung;
- Figur 3a: ein schematisches Blockschaltbild eines Ausführungsbeispiels eines ASC-Datenrahmens;
- Figur 3b: ein schematisches Blockschaltbild eines Ausführungsbeispiels eines CAN-Datenrahmens; und
- Figur 4: ein schematisches Ablaufdiagramm eines Ausführungsbeispiels des erfindungsgemäßen Verfahrens.

### Beschreibung der Figuren

In den Figuren bezeichnen gleiche Bezugszeichen gleiche oder funktionsgleiche Bestandteile.

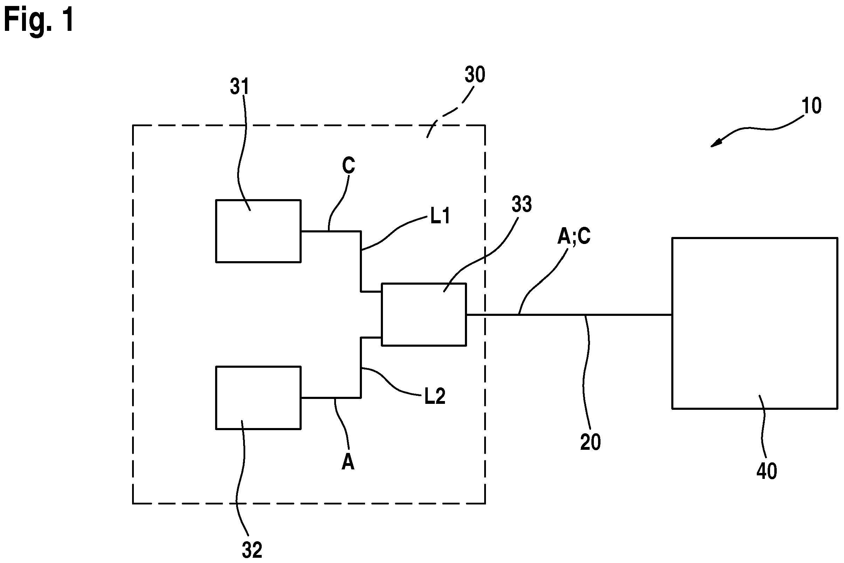

In Figur 1 ist ein schematisches Blockschaltbild eines ersten Ausführungsbeispiels eines Kommunikationssystems 10 gemäß der vorliegenden Erfindung dargestellt.

Das Kommunikationssystem 10 weist einen CAN-Bus 20, zumindest zwei mittels des CAN-Busses 20 gekoppelte Geräte 30, 40 und ein Schaltmittel 33 auf.

Die zumindest zwei mittels des CAN-Busses 20 gekoppelten Geräte 30, 40 umfassen vorzugsweise destens zwei Steuergeräte. Die Steuergeräte sind vorzugsweise in einem Kraftfahrzeug vorgesehen.

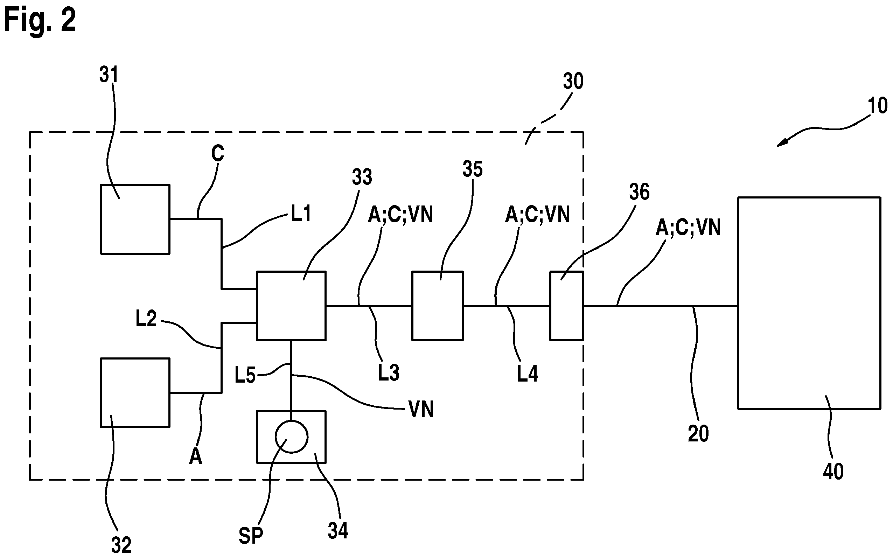

In den Figuren 1 und 2 bezeichnen die Bezugszeichen 30 und 40 beispielsweise zwei Steuergeräte, welche identisch ausgebildet sind. Aus Gründen der Übersichtlichkeit ist nur jeweils das erste Steuergerät 30 detailliert erläutert. Für das zweite Steuergerät 40 gilt allerdings Analoges.

Das erste Steuergerät 30 weist eine CAN-Steuereinheit 31, eine asynchrone, serielle Kommunikations(ASC)-Schnittstelleneinheit 32 und ein Schaltmittel 33 auf. Das Schaltmittel 33 und die CAN-Steuereinheit 31 sind mittels einer ersten Leitung L1 gekoppelt. Die CAN-Steuereinheit 31 ist ferner dazu eingerichtet, in einem ersten Übertragungsmodus CAN-Datenrahmen C mittels eines ersten physikalischen Protokolls über den CAN-Bus 20 zu übertragen. Dazu überträgt die CAN-Steuereinheit 31 die CAN-Datenrahmen C über die erste Leitung L1 zu dem Schaltmittel 33, welches die empfangenen CAN-Datenrahmen C dann an das zweite Steuergerät 40 über den CAN-Bus 20 übertragen kann. Für die Empfangsrichtung zu der CAN-Steuereinheit 31 gilt entsprechendes.

Die asynchrone serielle Kommunikations(ASC)-Schnittstelleneinheit 32 oder ASC-Schnittstelleneinheit 32 ist mittels einer zweiten Leitung L2 mit dem Schaltmittel 33 gekoppelt. Die ASC-Schnittstelleneinheit 32 ist dazu eingerichtet, in einem zweiten Übertragungsmodus ASC-Datenrahmen A mittels eines zweiten physikalischen Protokolls über den CAN-Bus 20 zu übertragen. Dazu ist die ASC-Schnittstelleneinheit 32 über eine zweite Leitung L2 zur Übertragung der ASC-Datenrahmen A mit dem Schaltmittel 33 gekoppelt.

Das Schaltmittel 33 ist dazu eingerichtet, zwischen dem ersten Übertragungsmodus und dem zweiten Übertragungsmodus in Abhängigkeit zumindest einer zwischen dem ersten Steuergerät 30 und zumindest einem weiteren Gerät, nach dem Beispiel der Figuren 1 und 2 dem zweiten Steuergerät 40, geltenden Vereinbarung V umzuschalten.

Die Vereinbarung V umfasst dabei vorzugsweise, in welchem oder welchen vorbestimmten Zeitfenstern und/oder in Abhängigkeit welches oder welcher vorbestimmte Ereignisse das jeweilige Schaltmittel 33 einer vorbestimmten Anzahl von Geräten, beispielsweise der beiden Steuergeräte 30, 40 gemäß der Figuren 1 und 2, in den ersten Übertragungsmodus oder in den zweiten Übertragungsmodus schaltet.

Ferner kann die Vereinbarung V angeben, in welchem oder welchen vorbestimmten Zeitfenstern und/oder in Abhängigkeit welches oder welcher vorbestimmten Ereignisse das jeweilige Schaltmittel 33 der beiden Steuergeräte 30, 40 in den zweiten Übertragungsmodus umschaltet und welches der Steuergeräte 30, 40 in einem oder mehreren anschließenden Zeitfenstern eine ausschließliche Sendeberechtigung besitzt.

Insbesondere kann die Vereinbarung V auch als zumindest ein in TTCAN definiertes Zeitfenster ausgestaltet sein oder in zumindest einem in TTCAN definierten Zeitfenster integriert sein. TTCAN bezeichnet "Time-Triggered-Communication-On-CAN". TTCAN setzt auf dem CAN-Bus auf und ermöglicht über höhere Protokollebenen eine Echtzeitsteuerung.

Des Weiteren ist der zweite Übertragungsmodus vorzugsweise gegenüber dem ersten Übertragungsmodus priorisiert, d.h. das jeweilige Schaltmittel 33 wird gemäß einer vorbestimmbaren Vorgabe immer dann in den zweiten Übertragungsmodus schalten, soweit dies die technischen Randbedingungen erlauben.

Des Weiteren ist ein in dem zweiten Übertragungsmodus sendendes Gerät, beispielsweise das erste Steuergerät 30, mittels des zweiten physikalischen Protokolls dazu geeignet oder eingerichtet, zu einer vorbestimmten Anzahl empfangender Geräte, beispielsweise dem zweiten Steuergerät 40 und weiterer Steuergeräte (nicht gezeigt), eine Punkt-zu-Punkt-Verbindung oder eine Punkt-zu-Mehrpunkt-Verbindung zur Verhinderung von asymmetrischen Verzögerungen auf dem CAN-Bus 20 auszubilden.

Vorzugsweise überträgt die CAN-Steuereinheit 31 die CAN-Datenrahmen C in dem ersten Übertragungsmodus mit einem ersten Bustakt über den CAN-Bus 20. Ferner überträgt die ASC-Schnittstelleneinheit 32 die ASC-Datenrahmen A in dem zweiten Übertragungsmodus mit einem zweiten Bustakt über den CAN-Bus 20. Der zweite Bustakt ist vorzugsweise höher als der erste Bustakt. Insbesondere ist der zweite Bustakt um einen Faktor zwischen 2 und 10, bevorzugt zwischen 5 und 10, besonders bevorzugt zwischen 8 und 10, höher als der erste Bustakt.

Figur 2 zeigt ein schematisches Blockschaltbild eines zweiten Ausführungsbeispiels des Kommunikationssystems 10 gemäß der vorliegenden Erfindung. Das zweite Ausführungsbeispiel des Kommunikationssystems 10 gemäß Figur 2 unterscheidet sich von dem ersten Ausführungsbeispiel des Kommunikationssystems 10 gemäß Figur 1 insbesondere dahingehend, dass zwischen dem Bussystem 20 und dem jeweiligen Schaltmittel 33 eine Treibereinrichtung 35 und eine Schnittstelleneinrichtung oder Kommunikationsschnittstelle 36 angeordnet sind. Die Treibereinrichtung 35 ist mittels einer dritten Leitung L3 mit dem Schaltmittel 33 und mittels einer vierten Leitung L4 mit der Schnittstelleneinrichtung 36 verbunden. Die Schnittstelleneinrichtung 36 ist weiter mittels des CAN-Busses 20 mit dem zweiten Steuergerät 40 und/oder weiteren Steuergeräten (nicht gezeigt) gekoppelt.

Die Treibereinrichtung 35 ist insbesondere als ein CAN-Treiber ausgebildet, welcher eine bidirektionale Verbindung mit den gewünschten Pegeln zur Schnittstelleneinrichtung 36 ermöglicht.

Das Schaltmittel 33 ist insbesondere als ein programmgesteuerter Schnittstellenumschalter oder auch als ein Multiplexer ausgestaltet, welcher eine Umschaltung zwischen der CAN-Steuereinheit 31 und der ASC-Schnittstelleneinheit 32 ermöglicht. Des Weiteren kann gemäß Figur 2 die Vereinbarung V zumindest teilweise als Teil eines in dem jeweiligen Gerät 30, 40, in dem Beispiel gemäß Figur 2 in dem ersten Steuergerät 30, speicherbaren Steuerprogramms SP und/oder zumindest teilweise als Teil einer über den CAN-Bus 20 übertragbaren Vereinbarungsnachricht VN ausgebildet sein. Zur Speicherung des Steuerprogramms SP ist beispielsweise eine Speichereinrichtung 34 in die jeweiligen Steuergeräte 30 integriert. Die Speichereinrichtung 34 ist beispielsweise als ein RAM-Speicher oder EEPROM-Speicher ausgebildet.

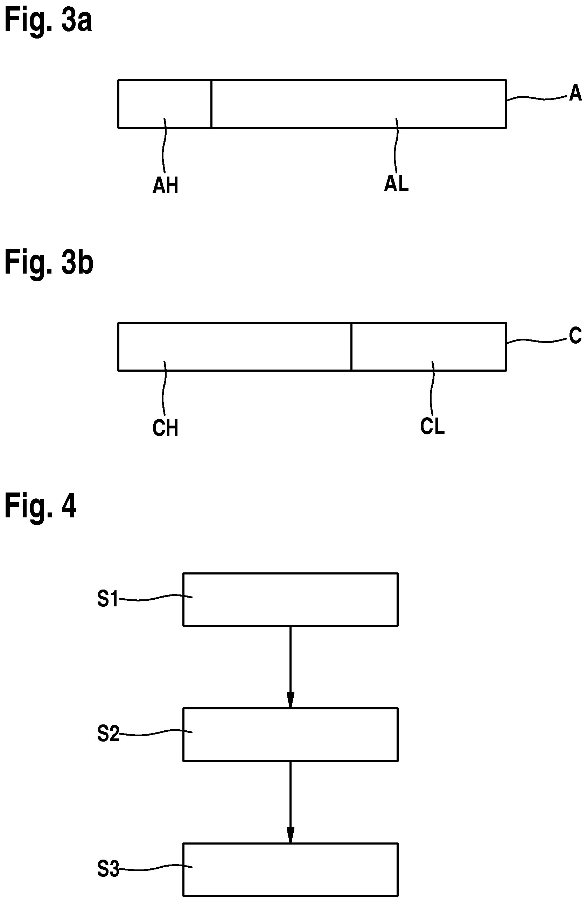

Figur 3a zeigt ein schematisches Blockschaltbild eines Ausführungsbeispiels eines ASC-Datenrahmens A und Figur 3b zeigt ein schematisches Blockschaltbild eines Ausführungsbeispiels eines CAN-Datenrahmens C. Der CAN-Datenrahmen C und der ASC-Datenrahmen A weisen jeweils einen Header-Teil CH, AH und einen Nutzdatenteil CL, AL auf. Der Header-Teil AH des ASC-Datenrahmens A ist kleiner als der Header-Teil CH des CAN-Datenrahmens C. Damit ist ermöglicht, dass der Nutzdatenteil AL des ASC-Datenrahmens A größer als der Nutzdatenteil CL des CAN-Datenrahmens C ist. Somit wird erfindungsgemäß durch die ermöglichte Übertragung von ASC-Datenrahmen über den CAN-Bus 20 eine Erhöhung der Datenübertragungsrate erzielt.

Vorzugsweise ist der Header-Teil AH des ASC-Datenrahmens A um einen Faktor zwischen 2 bis 5, bevorzugt zwischen 3 und 5, besonders bevorzugt zwischen 4 und 5, kleiner als der Header-Teil CH des CAN-Datenrahmens C.

In Figur 4 ist ein schematisches Ablaufdiagramm eines Ausführungsbeispiels des erfindungsgemäßen Verfahrens zum Betreiben eines Kommunikationssystems 10 mit einem CAN-Bus 20 und zumindest zwei mittels des CAN-Busses 20 gekoppelten Geräten 30, 40, insbesondere Steuergeräten, dargestellt.

Nachfolgend wird das erfindungsgemäße Verfahren anhand des Blockschaltbildes in Figur 4 unter Verweis auf das schematische Blockschaltbild gemäß Figur 1 beschrieben. Das Ausführungsbeispiel des erfindungsgemäßen Verfahrens gemäß Figur 4 weist folgende Verfahrensschritte S1 bis S3 auf:

### Verfahrensschritt S1:

Das jeweilige Gerät 30, 40 wird mit einer CAN-Steuereinheit 31 ausgestattet. Die CAN-Steuereinheit 31 ist dazu eingerichtet, in einem ersten Übertragungsmodus CAN-Datenrahmen C mittels eines ersten physikalischen Protokolls über den CAN-Bus 20 zu übertragen.

### Verfahrensschritt S2:

Das jeweilige Gerät 30, 40 wird mit einer asynchronen, seriellen Kommunikations(ASC)-Schnittstelleneinheit 32 ausgestattet, welche dazu eingerichtet ist, in einem ersten Übertragungsmodus ASC-Datenrahmen A mittels eines zweiten physikalischen Protokolls über den CAN-Bus 20 zu übertragen.

### Verfahrensschritt S3:

Eine vorbestimmte Anzahl der Geräte 30, 40 wird zwischen dem ersten Übertragungsmodus und dem zweiten Übertragungsmodus in Abhängigkeit zumindest einer zwischen der vorbestimmten Anzahl der Geräte 30, 40 geltenden Vereinbarungen V umgeschaltet.

Obwohl die vorliegende Erfindung vorstehend anhand der bevorzugten Ausführungsbeispiele beschrieben wurde, ist sie hierauf nicht beschränkt, sondern auf vielfältige Art und Weise modifizierbar.
Beispielsweise ist es denkbar, das erfindungsgemäße Kommunikationssystem nicht nur in einem Kraftfahrzeug, sondern auch in einem Flugzeug oder Raumfahrzeug anzuordnen.

## Patentansprüche

1. Kommunikationssystem (10) mit:
a) einem CAN-Bus (20);
b) zumindest zwei mittels des CAN-Busses (20) gekoppelten Geräten (30, 40), wobei wenigstens zwei der mittels des CAN-Busses gekoppelten Geräte (30, 40) aufweisen:
b1) eine CAN-Steuereinheit (31), welche dazu geeignet ist, in einem ersten Übertragungsmodus CAN-Datenrahmen (C) mittels eines ersten physikalischen Protokolls über den CAN-Bus (20) zu übertragen;
b2) eine asynchrone, serielle Kommunikations(ASC)-Schnittstelleneinheit (32), welche dazu geeignet ist, in einem zweiten Übertragungsmodus ASC-Datenrahmen (A) mittels eines zweiten physikalischen Protokolls über den CAN-Bus (20) zu übertragen, und
b3) ein Schaltmittel (33), welches durch eine erste Leitung (L1) mit der CAN-Steuereinheit (31) verbunden ist und welches durch eine zweite Leitung (L2) mit der asynchronen, seriellen Kommunikations(ASC)-Schnittstelleneinheit (32) verbunden ist,
wobei das Schaltmittel dazu geeignet ist, zwischen dem ersten Übertragungsmodus und dem zweiten Übertragungsmodus in Abhängigkeit zumindest einer zwischen dem jeweiligen Gerät (30) und zumindest einem weiteren Gerät (40) geltenden Vereinbarung (V) umzuschalten,
b4) eine Speichereinrichtung (34) zur Speicherung eines Steuerprogramms (SP), wobei die Vereinbarung (V) zumindest teilweise als Teil des Steuerprogramms (SP) ausgebildet ist,
b5) eine Treibereinrichtung (35), welche das Schaltmittel (33) mit einer Schnittstelleneinrichtung (36) verbindet, wobei die Schnittstelleneinrichtung zur Kopplung des jeweiligen Gerätes mit einem weiteren Gerät über den CAN-Bus (20) ausgebildet ist,
**dadurch gekennzeichnet, dass** die Vereinbarung (V) umfasst, in welchem oder welchen vorbestimmten Zeitfenstern das jeweilige Schaltmittel (33) einer vorbestimmten Anzahl von Geräten (30, 40) in den ersten Übertragungsmodus oder in den zweiten Übertragungsmodus schaltet.

2. Kommunikationssystem nach Anspruch 1,
**dadurch gekennzeichnet, dass** die Vereinbarung (V) weiterhin umfasst, in Abhängigkeit welches oder welcher vorbestimmter Ereignisse das jeweilige Schaltmittel (33) einer vorbestimmten Anzahl von Geräten (30, 40) in den ersten Übertragungsmodus oder in den zweiten Übertragungsmodus schaltet.

3. Kommunikationssystem nach Anspruch 1 oder 2,
**dadurch gekennzeichnet, dass** die Vereinbarung (V) weiterhin angibt, welches der Geräte (30, 40) in einem oder mehreren anschließenden Zeitfenstern eine ausschließliche Sendeberechtigung besitzt.

4. Kommunikationssystem nach Anspruch 1, 2 oder 3,
**dadurch gekennzeichnet, dass** die Vereinbarung (V) weiterhin zumindest teilweise als Teil einer über den CAN-Bus (20) übertragbaren Vereinbarungsnachricht (VN) ausgebildet ist.

5. Kommunikationssystem nach einem der Ansprüche 1 bis 4,
**dadurch gekennzeichnet, dass** die Vereinbarung (V) als zumindest ein in TTCAN definiertes Zeitfenster ausgestaltet oder in zumindest einem in TTCAN definiertem Zeitfenster integriert ist.

6. Kommunikationssystem nach einem der Ansprüche 1 bis 5,
**dadurch gekennzeichnet, dass** der zweite Übertragungsmodus gegenüber dem ersten Übertragungsmodus priorisiert ist.

7. Kommunikationssystem nach einem der Ansprüche 1 bis 6,
**dadurch gekennzeichnet, dass** ein in dem zweiten Übertragungsmodus sendendes Gerät (30, 40) mittels des zweiten physikalischen Protokolls dazu geeignet ist, zu einer vorbestimmten Anzahl empfangender Geräte (30, 40) eine Punkt-zu-Punkt-Verbindung oder eine Punkt-zu-Mehrpunkt-Verbindung zur Verhinderung von asymmetrischen Verzögerungen auf dem CAN-Bus (20) auszubilden.

8. Kommunikationssystem nach einem der Ansprüche 1 bis 7,
**dadurch gekennzeichnet, dass** die CAN-Steuereinheit (31) die CAN-Datenrahmen (C) in dem ersten Übertragungsmodus mit einem ersten Bustakt über den CAN-Bus (20) überträgt und die ASC-Schnittstelleneinheit (32) die ASC-Datenrahmen (A) in dem zweiten Übertragungsmodus mit einem zweiten Bustakt über den CAN-Bus (20) überträgt, wobei der zweite Bustakt höher als der erste Bustakt ist.

9. Kommunikationssystem nach Anspruch 8,
**dadurch gekennzeichnet, dass** der zweite Bustakt um einen Faktor zwischen 2 und 10, bevorzugt zwischen 5 und 10, besonders bevorzugt zwischen 8 und 10, höher als der erste Bustakt ist.

10. Kommunikationssystem nach einem der Ansprüche 1 bis 9,
**dadurch gekennzeichnet, dass** ein CAN-Datenrahmen (C) und ein ASC-Datenrahmen (A) jeweils einen Header-Teil (CH; AH) und einen Nutzdaten-Teil (CL, AL) aufweisen, wobei der Header-Teil (AH) des ASC-Datenrahmens (A) kleiner als der Header-Teil (CH) des CAN-Datenrahmens (C) ist.

11. Kommunikationssystem nach Anspruch 10,
**dadurch gekennzeichnet, dass** der Header-Teil (AH) des ASC-Datenrahmens (A) um einen Faktor zwischen 2 bis 5, bevorzugt zwischen 3 und 5, besonders bevorzugt zwischen 4 und 5, kleiner als der Header-Teil (CH) des CAN-Datenrahmens (C) ist.

12. Kommunikationssystem nach einem der Ansprüche 1 bis 11,
**dadurch gekennzeichnet, dass** die zumindest zwei mittels des CAN-Busses (20) gekoppelten Geräte (30, 40) entweder eine Testvorrichtung und mindestens ein Steuergerät oder mindestens zwei Steuergeräte umfassen.

13. Kommunikationssystem nach einem der Ansprüche 1 bis 12,
**dadurch gekennzeichnet, dass** in dem zweiten Übertragungsmodus Zeitfenster für die Übertragung von ASC-Datenrahmen (A) vorbestimmt werden, in denen zumindest ein jeweiliges Gerät (30, 40) oder eine vorbestimmte Anzahl der Geräte (30, 40) senden oder empfangen können.

14. Verfahren zum Betreiben eines Kommunikationssystems (10) mit einem CAN-Bus (20) und zumindest zwei mittels des CAN-Busses (20) gekoppelten Geräten (30, 40), mit den Schritten:
a) Ausstatten von wenigstens zwei der gekoppelten Geräte (30, 40) mit einer CAN-Steuereinheit (31), welche dazu geeignet ist, in einem ersten Übertragungsmodus CAN-Datenrahmen (C) mittels eines ersten physikalischen Protokolls über den CAN-Bus (20) zu übertragen;
b) Ausstatten von wenigstens zwei der gekoppelten Geräte (30, 40) mit einer asynchronen, seriellen Kommunikations(ASC)-Schnittstelleneinheit (32), welche dazu geeignet ist, in einem zweiten Übertragungsmodus ASC-Datenrahmen (A) mittels eines zweiten physikalischen Protokolls über den CAN-Bus (20) zu übertragen;
c) Ausstatten von wenigstens zwei der gekoppelten Geräte (30, 40) mit einem Schaltmittel (33) und einer Treibereinrichtung (35), wobei das Schaltmittel (33) durch eine erste Leitung (L1) mit der CAN-Steuereinheit (31) verbunden ist und durch eine zweite Leitung (L2) mit der asynchronen, seriellen Kommunikations(ASC)-Schnittstelleneinheit (32) verbunden ist,
wobei das Schaltmittel dazu geeignet ist, in Abhängigkeit zumindest einer zwischen dem jeweiligen Gerät (30) und zumindest einem weiteren Gerät (40) geltenden Vereinbarung (V) entweder die CAN-Steuereinheit (31) oder die asynchrone, serielle Kommunikations-Schnittstelleneinheit (32) mit der Treibereinrichtung zu verbinden,
d) Ausstatten von wenigstens zwei der gekoppelten Geräte (30, 40) mit einer Speichereinrichtung (34) zur Speicherung eines Steuerprogramms (SP), wobei die Speichereinrichtung mit dem Schaltmittel (33) verbunden ist,
e) Ausstatten von wenigstens zwei der gekoppelten Geräte (30, 40) mit einer Schnittstelleneinrichtung (36), wobei die Schnittstelleneinrichtung (36) über die Treibereinrichtung (36) mit dem Schaltmittel (33) verbunden ist, wobei die Schnittstelleneinrichtung zur Kopplung des jeweiligen Gerätes mit einem weiteren Gerät über den CAN-Bus (20) ausgebildet ist,
und
f) Umschalten einer vorbestimmten Anzahl von Geräten (30, 40) zwischen dem ersten Übertragungsmodus und dem zweiten Übertragungsmodus in Abhängigkeit von der geltenden Vereinbarung (V),
wobei die Vereinbarung (V) umfasst, in welchem oder welchen vorbestimmten Zeitfenstern das jeweilige Schaltmittel (33) eine vorbestimmte Anzahl von Geräten (30, 40) in den ersten Übertragungsmodus oder in den zweiten Übertragungsmodus schaltet.

## Claims

1. Communication system (10) having:
a) a CAN bus (20);
b) at least two devices (30, 40) coupled by means of the CAN bus (20), wherein at least two of the devices (30, 40) coupled by means of the CAN bus have:
b1) a CAN control unit (31) that is suitable for transmitting CAN data frames (C) via the CAN bus (20) by means of a first physical protocol in a first transmission mode;
b2) an asynchronous serial communication (ASC) interface unit (32) that is suitable for transmitting ASC data frames (A) via the CAN bus (20) by means of a second physical protocol in a second transmission mode, and
b3) a switching means (33) that is connected to the CAN control unit (31) (L1) and that is connected to the asynchronous serial communication (ASC) interface unit (32) by a second line (L2),
wherein the switching means is suitable for changing over between the first transmission mode and the second transmission mode on the basis of at least one agreement (V) valid between the respective device (30) and at least one further device (40), b4) a memory device (34) for storing a control program (SP), wherein the agreement (V) is at least partly configured as part of the control program (SP),
b5) a driver device (35) that connects the switching means (33) to an interface device (36), wherein the interface device is configured to couple the respective device to a further device via the CAN bus (20),
**characterized in that** the agreement (V) comprises in which predetermined time window(s) the respective switching means (33) of a predetermined number of devices (30, 40) switches to the first transmission mode or to the second transmission mode.

2. Communication system according to Claim 1,
**characterized in that** the agreement (V) moreover comprises on the basis of which predetermined event(s) the respective switching means (33) of a predetermined number of devices (30, 40) switches to the first transmission mode or to the second transmission mode.

3. Communication system according to Claim 1 or 2,
**characterized in that** the agreement (V) moreover indicates which of the devices (30, 40) has an exclusive send authorization in one or more subsequent time windows.

4. Communication system according to Claim 1, 2 or 3,
**characterized in that** the agreement (V) is moreover at least partly configured as part of an agreement message (VN) transmittable via the CAN bus (20).

5. Communication system according to one of Claims 1 to 4,
**characterized in that** the agreement (V) is embodied as at least one time window defined in TTCAN or is integrated in at least one time window defined in TTCAN.

6. Communication system according to one of Claims 1 to 5,
**characterized in that** the second transmission mode has priority over the first transmission mode.

7. Communication system according to one of Claims 1 to 6,
**characterized in that** a device (30, 40) sending in the second transmission mode is suitable, by means of the second physical protocol, for configuring a point-to-point connection or a point-to-multipoint connection for a predetermined number of receiving devices (30, 40) to prevent asymmetric delays on the CAN bus (20).

8. Communication system according to one of Claims 1 to 7,
**characterized in that** the CAN control unit (31) transmits the CAN data frames (C) via the CAN bus (20) using a first bus clock rate in the first transmission mode and the ASC interface unit (32) transmits the ASC data frames (A) via the CAN bus (20) using a second bus clock rate in the second transmission mode, the second bus clock rate being higher than the first bus clock rate.

9. Communication system according to Claim 8,
**characterized in that** the second bus clock rate is higher than the first bus clock rate by a factor of between 2 and 10, preferably between 5 and 10, particularly preferably between 8 and 10.

10. Communication system according to one of Claims 1 to 9,
**characterized in that** a CAN data frame (C) and an ASC data frame (A) each have a header part (CH; AH) and a user data part (CL, AL), the header part (AH) of the ASC data frame (A) being smaller than the header part (CH) of the CAN data frame (C).

11. Communication system according to Claim 10,
**characterized in that** the header part (AH) of the ASC data frame (A) is smaller than the header part (CH) of the CAN data frame (C) by a factor of between 2 and 5, preferably between 3 and 5, particularly preferably between 4 and 5.

12. Communication system according to one of Claims 1 to 11,
**characterized in that** the at least two devices (30, 40) coupled by means of the CAN bus (20) comprise either a test apparatus and at least one controller or at least two controllers.

13. Communication system according to one of Claims 1 to 12,
**characterized in that** in the second transmission mode time windows for the transmission of ASC data frames (A) are predetermined in which at least one respective device (30, 40) or a predetermined number of the devices (30, 40) can send or receive.

14. Method for operating a communication system (10) having a CAN bus (20) and at least two devices (30, 40) coupled by means of the CAN bus (20), having the steps of:
a) equipping at least two of the coupled devices (30, 40) with a CAN control unit (31) that is suitable for transmitting CAN data frames (C) via the CAN bus (20) by means of a first physical protocol in a first transmission mode;
b) equipping at least two of the coupled devices (30, 40) with an asynchronous serial communication (ASC) interface unit (32) that is suitable for transmitting ASC data frames (A) via the CAN bus (20) by means of a second physical protocol in a second transmission mode;
c) equipping at least two of the coupled devices (30, 40) with a switching means (33) and a driver device (35), wherein the switching means (33) is connected to the CAN control unit (31) by a first line (L1) and to the asynchronous serial communication (ASC) interface unit (32) by a second line (L2),
wherein the switching means is suitable for taking at least one agreement (V) valid between the respective device (30) and at least one further device (40) as a basis for connecting either the CAN control unit (31) or the asynchronous serial communication interface unit (32) to the driver device,
d) equipping at least two of the coupled devices (30, 40) with a memory device (34) for storing a control program (SP), wherein the memory device is connected to the switching means (33),
e) equipping at least two of the coupled devices (30, 40) with an interface device (36), wherein the interface device (36) is connected to the switching means (33) via the driver device (36), the interface device being configured to couple the respective device to a further device via the CAN bus (20),
and
f) changing over a predetermined number of devices (30, 40) between the first transmission mode and the second transmission mode on the basis of the valid agreement (V),
wherein the agreement (V) comprises in which predetermined time window(s) the respective switching means (33) switches a predetermined number of devices (30, 40) to the first transmission mode or to the second transmission mode.

## Revendications

1. Système de communication (10), comportant :
a) un bus CAN (20) ;
b) au moins deux appareils couplés (30, 40) au moyen du bus CAN (20), dans lequel au moins deux des appareils couplés (30, 40) au moyen du bus CAN comportent :
b1) une unité de commande CAN (31) qui est conçue, dans un premier mode de transmission, pour transmettre des trames de données CAN (C) au moyen d'un premier protocole physique par l'intermédiaire du bus CAN (20) ;
b2) une unité d'interface de communication série asynchrone (ASC) (32) qui est conçue, dans un second mode de transmission, pour transmettre des trames de données (A) au moyen d'un second protocole physique par l'intermédiaire du bus CAN (20), et
b3) un moyen de commutation (3) qui est relié par l'intermédiaire d'une première ligne (L1) à l'unité de commande CAN (31) et qui est reliée par l'intermédiaire d'une seconde ligne (L2) à l'unité d'interface de communication série asynchrone (ASC) (32),
dans lequel le moyen de commutation est conçu pour basculer entre le premier mode de transmission et le second mode de transmission en fonction d'au moins une convention (V) établie entre l'appareil respectif (30) et au moins un autre appareil (40),
b4) un dispositif à mémoire (34) destiné à stocker un programme de commande (SP), dans lequel la convention (V) est établie au moins partiellement en tant que partie du programme de commande (SP),
b5) un dispositif pilote (35) qui relie le moyen de commutation (33) à un dispositif d'interface (36), dans lequel le dispositif d'interface est conçu pour coupler l'appareil respectif à un autre appareil par l'intermédiaire du bus CAN (20),
**caractérisé en ce que** la convention (V) indique la fenêtre ou les fenêtre(s) temporelle(s) prédéterminée(s), dans laquelle ou dans lesquelles le moyen de commutation (33) respectif d'un nombre prédéterminé d'appareils (30, 40) bascule dans le premier mode de transmission ou dans le second mode de transmission.

2. Système de communication selon la revendication 1,
**caractérisé en ce que** la convention (V) indique en outre l'événement ou les événements prédéterminé(s) en fonction duquel ou desquels le moyen de commutation (33) d'un nombre prédéterminé d'appareils (30, 40) bascule dans le premier mode de transmission ou dans le second mode de transmission.

3. Système de communication selon la revendication 1 ou 2,
**caractérisé en ce que** la convention (V) indique en outre lequel des appareils (30, 40) possède un droit d'émission exclusif dans une ou plusieurs fenêtres temporelles suivantes.

4. Système de communication selon la revendication 1, 2 ou 3,
**caractérisé en ce que** la convention (V) est en outre conçue au moins partiellement en tant que partie d'un message de convention (VN) pouvant être transmis par l'intermédiaire du bus CAN (20).

5. Système de communication selon l'une quelconque des revendications 1 à 4,
**caractérisé en ce que** la convention (V) est configurée sous la forme d'au moins une fenêtre temporelle définie dans un bus TTCAN ou est intégrée à au moins une fenêtre temporelle définie dans un bus TTCAN.

6. Système de communication selon l'une quelconque des revendications 1 à 5,
**caractérisé en ce que** le second mode de transmission a priorité sur le premier mode de transmission.

7. Système de communication selon l'une quelconque des revendications 1 à 6,
**caractérisé en ce qu'**un appareil (30, 40) émettant dans le second mode de transmission est conçu, au moyen du second protocole physique, sur un nombre prédéterminé d'appareils récepteurs (30, 40), pour établir une liaison point à point ou une liaison point à multipoint permettant d'éviter des retards asymétriques sur le bus CAN (20).

8. Système de communication selon l'une quelconque des revendications 1 à 7,
**caractérisé en ce que** l'unité de commande CAN (31) transmet les trames de données CAN (C) dans le premier mode de transmission avec une première horloge de bus par l'intermédiaire du bus CAN (20) et **en ce que** l'unité d'interface ASC (32) transmet les trames de données ASC (A) dans le second mode de transmission avec une seconde horloge de bus par l'intermédiaire du bus CAN (20), dans lequel la seconde horloge de bus est supérieure à la première horloge de bus.

9. Système de communication selon la revendication 8,
**caractérisé en ce que** la seconde horloge de bus est supérieure à la première horloge de bus d'un facteur compris entre 2 et 10, de préférence, entre 5 et 10, et de façon particulièrement préférée, entre 8 et 10.

10. Système de communication selon l'une quelconque des revendications 1 à 9,
**caractérisé en ce qu'**une trame de données CAN (C) et une trame de données ASC (A) présentent respectivement une partie d'entête (CH ; AH) et une partie de données utiles (CL, AL), dans lequel la partie d'entête (AH) de la trame de données ASC (A) est plus petite que la partie d'entête (CH) de la trame de données CAN (C).

11. Système de communication selon la revendication 10,
**caractérisé en ce que** la partie d'entête (AH) de la trame de données ASC (A) est plus petite que la partie d'entête (CH) de la trame de données CAN (C) d'un facteur compris entre 2 et 5, de préférence, entre 3 et 5, et de façon particulièrement préférée, entre 4 et 5.

12. Système de communication selon l'une quelconque des revendications 1 à 11,
**caractérisé en ce que** lesdits au moins deux appareils couplés (30, 40) au moyen du bus CAN (20) comprennent soit un dispositif de test et au moins un appareil de commande, soit au moins deux appareils de commande.

13. Système de communication selon l'une quelconque des revendications 1 à 12,
**caractérisé en ce que**, dans le second mode de transmission, des fenêtres temporelles destinées à la transmission de trames de données ASC (A) sont prédéterminées, fenêtres dans lesquelles au moins un appareil (30, 40) respectif ou un nombre prédéterminé des appareils (30, 40) peut ou peuvent émettre ou recevoir.

14. Procédé de mise en fonctionnement d'un système de communication (10), comportant un bus CAN (20) et au moins deux appareils couplés (30, 40) au moyen du bus CAN (20), comportant les étapes consistant à :
a) doter au moins deux des appareils couplés (30, 40) d'une unité de commande CAN (31) qui est conçue pour transmettre, dans un premier mode de transmission, des trames de données CAN (C) au moyen d'un premier protocole physique par l'intermédiaire du bus CAN (20) ;
b) doter au moins deux des appareils couplés (30, 40) d'une unité d'interface de communication série asynchrone (ASC) (32) qui est conçue pour transmettre, dans un second mode de transmission, des trames de données ASC (A) au moyen d'un second protocole physique par l'intermédiaire du bus CAN (20) ;
c) doter au moins deux des appareils couplés (30, 40) d'un moyen de commutation (33) et d'un dispositif pilote (35), dans lequel le moyen de commutation (33) est relié par l'intermédiaire d'une première ligne (L1) à l'unité de commande CAN (31) et par l'intermédiaire d'une seconde ligne (L2) à l'unité d'interface de communication série asynchrone (ASC) (32),
dans lequel le moyen de commutation est conçu pour relier soit l'unité de commande CAN (31), soit l'unité d'interface de communication série asynchrone (32) au dispositif pilote en fonction d'au moins une convention (V) valable entre l'appareil respectif (30) et au moins un autre appareil (40),
d) doter au moins deux des appareils couplés (30, 40) d'un dispositif à mémoire (34) pour stocker un programme de commande (SP), dans lequel le dispositif à mémoire est relié au moyen de commutation (33),
e) doter au moins deux des appareils couplés (30, 40) d'un dispositif d'interface (36), dans lequel le dispositif d'interface (36) est relié par l'intermédiaire du dispositif pilote (36) au moyen de commutation (33), dans lequel le dispositif d'interface est conçu pour coupler l'appareil respectif à un autre appareil par l'intermédiaire du bus CAN (20),
f) faire basculer un nombre prédéterminé d'appareils (30, 40) entre le premier mode de transmission et le second mode de transmission en fonction de la convention établie (V),
dans lequel la convention (V) indique la fenêtre ou les fenêtre(s) temporelle(s) prédéterminée(s), dans laquelle ou dans lesquelles le moyen de commutation (33) respectif fait basculer un nombre prédéterminé d'appareils (30, 40) dans le premier mode de transmission ou dans le second mode de transmission.
